# EUROPÄISCHE PATENTSCHRIFT

(11) **EP 0 980 619 B1**
(45) Veröffentlichungstag und Bekanntmachung des Hinweises auf die Patenterteilung: **07.09.2005**
(21) Anmeldenummer: 98933474.3
(22) Anmeldetag: 07.05.1998
(51) Int. Cl.: H04L 29/06

(54) **VERFAHREN UND VORRICHTUNGEN ZUR CODIERUNG, ÜBERTRAGUNG UND DECODIERUNG DIGITALER DATEN**
METHODS AND DEVICES FOR CODING, TRANSMITTING AND DECODING DIGITAL DATA
PROCEDES ET DISPOSITIFS DE CODAGE, DE TRANSMISSION ET DE DECODAGE DE DONNEES NUMERIQUES

(30) Priorität: 07.05.1997 DE 19719468
(43) Veröffentlichungstag der Anmeldung: 23.02.2000
(73) Patentinhaber: Infineon Technologies AG, 81669 München (DE); SIEMENS AKTIENGESELLSCHAFT, 80333 München (DE)
(72) Erfinder: WIMMER, Bernhard, D-81825 München (DE); STOCKHAMMER, Thomas, D-81373 München (DE)
(74) Vertreter: Reinhard - Skuhra - Weise & Partner
(86) Internationale Anmeldenummer: PCT/DE1998/001274
(87) Internationale Veröffentlichungsnummer: WO 1998/051039

(56) Entgegenhaltungen:
- EP-A- 0 666 652
- EP-A- 0 690 630
- EP-A- 0 739 139
- US-A- 4 229 818
- US-A- 4 293 951
- US-A- 4 736 369
- US-A- 5 361 261
- ANDREW S. TANENBAUM: "Computer Networks" 1996 , PRENTICE-HALL INTERNATIONAL , UPPER SADDLE RIVER, NEW JERSEY, US XP002081696 siehe Seite 183, Absatz 3.2. - Seite 190, Absatz 3.3. siehe Seite 275, Absatz 4.3. - Seite 287, Absatz 4.3.2. siehe Seite 730, Absatz 7.7.3. - Seite 744, Absatz 7.7.4.

## Beschreibung

Die Erfindung betrifft die Codierung, Übertragung und Decodierung digitaler Daten, die in Datensegmente variabler Länge gruppiert werden.

Die EP 0690630 A2 beschreibt ein digitales serielles Dateninterface für Video- und Audiodaten. Daten werden dabei in einem bestimmten digitalen Signalformat über einen Kommunikationsübertragungskanal übertragen. Die Daten werden zur Datenübertragung in Datensegmente gruppiert. Die Datensegmente umfassen eine Kontrollinformation und ein Nutzdatenfeld. Dabei wird eine Längenangabe des Datensegments bei der Kodierung für die Kontrollinformation des Datensegments eingetragen. Ferner wird jedem Datensegment eine Synchronisationsinformation zugewiesen.

Die EP-A-0666652 beschreibt, dass in einem Empfänger zur Weiterverarbeitung eines Datensegments die Längen anderer Datensegmente ermittelt werden. Die zu dekodierenden Datensegmente enthalten keine Kontrollinformation bzgl. der Datensegmentlänge und der Synchronisation.

Bei der Übertragung digitaler Daten werden bei sogenannten paketorientierter Datenübertragung die Daten in Datensegmente gruppiert, die eine fest vorgegebene oder eine variable Segmentlänge aufweisen. Die Datensegmente werden kanalcodiert und übertragen.

Digitale Daten sind beispielsweise digitale Videodaten, digitale Audiodaten oder auch digitale Textinformation, z.B. in ASCII-Format.

Werden variable Segmentlängen für die Datensegmente zugelassen, so besteht für die Empfangsstation das Problem, sich auf den empfangenen sequentiellen Bitstrom korrekt hinsichtlich der Datensegmente aufzusynchronisieren, d.h. jeweils den Anfang eines Datensegments korrekt aufzufinden. Diese Aufgabe wird üblicherweise von einem Multiplexer gelöst.

In (ITU-H.223, Internationale Telecommunications Union, Multiplex Protocol for low bitrate multimedia communication, 1996) ist das Multiplexer-Protocoll ITU-H.223 des Bildtelephoniestandards ITU-H.324 beschrieben. In dem Multiplex-Protokoll ITU-H.223 werden variable Segmentlängen verwendet. Die einzelnen Datensegmente werden durch ein sogenanntes Synchronisationswort (HDLC-Flags, High Level Data Control-Flags) voneinander getrennt. Das HDLC-Flag besteht aus der Bitfolge "0111 1110". Um eine fehlerhafte Klassifikation (Emulation) von einer in dem Datensegment vorkommenden gleichen Bitfolge als Synchronisationswort zu verhindern, wird bei der Codierung jedes Datensegment nach der Bitfolge "11111" (fünf aufeinanderfolgende Bits mit dem Wert "1") untersucht. Wird eine solche Bitfolge gefunden, so wird automatisch ein Bit mit dem Wert "0" eingefügt. Diese Vorgehensweise wird als Bitstopfen (Bitstuffing) bezeichnet.

Dieses Verfahren zeigt bei einem fehlerhaften Übertragungskanal, z.B. bei der Funkübertragung gemäß dem GSM-Verfahren oder dem DECT-Verfahren, schlechte Eigenschaften. Durch den fehlerhaften Übertragungskanal wird oftmals das Synchronisationswort nicht gefunden, falls in dem Synchronisationswort bei der Übertragung ein Fehler auftritt. Auch kann ein Übertragungsfehler im Datensegment dazu führen, dass das Synchronisationswort emuliert.wird, was zu einer falschen Synchronisation beim Empfänger des übertragenen Datensegments führt.

Somit liegt der Erfindung das Problem zugrunde, Verfahren und Vorrichtungen anzugeben, mit denen eine sichere Synchronisation auf die Datensegmente erreicht wird.

Das Problem wird durch ein Verfahren gemäß Patentanspruch 1, 2 sowie durch Vorrichtungen gemäß Patentansprüchen 9, 10 gelöst.

Die Vorrichtung zur Codierung digitaler Daten weist eine Prozessoreinheit auf, die derart eingerichtet ist, dass die Verfahrensschritte der Verfahren zur Codierung durchgeführt werden.

Die Vorrichtung zur Dekodierung digitaler Daten weist eine Prozessoreinheit auf, die derart eingerichtet ist, dass die Verfahrensschritte der Verfahren zur Decodierung durchgeführt werden.

Die Vorrichtungen können Universalrechner sein mit einem programmierbaren Mikroprozessor, der Prozessoreinheit. Die Codierung bzw. Decodierung der digitalisierten Bilder erfolgt in diesem Fall unter Verwendung eines Computerprogramms, das derart programmiert ist, dass die entsprechenden Verfahrensschritte von dem Rechner durchgeführt werden.

Die Vorrichtungen können auch spezielle Hardware-Bausteine, z.B. eine spezielle Computerkarte zur Codierung bzw. Decodierung sein.

Anschaulich kann die Erfindung darin gesehen werden, dass eine Längenangabe des jeweiligen Datensegments in der Kontrollinformation des Datensegments enthalten ist, wodurch:eine sichere Synchronisation und damit verbesserte Fehlerrobustheit erreicht wird.

Vorteilhafte Weiterbildungen der Erfindung ergeben sich aus den abhängigen Ansprüchen.

Die Fehlerrobustheit wird in einer Weiterbildung dadurch weiter verbessert, dass zusätzlich zu der Angabe der Segmentlänge auch ein Synchronisationswort verwendet wird und gegebenenfalls auch die Technik des Bitstopfens.

Ferner ist es in einer Weiterbildung zur weiteren Erhöhung der Fehlerrobustheit vorteilhaft, die Angabe der Segmentlänge und/oder eine Angabe über die Art der in dem Datensegment enthaltenen Daten mit Fehlererkennungsinformation und/oder Fehlerkorrekturinformation zu sichern.

In den Figuren ist ein bevorzugtes Ausführungsbeispiel der Erfindung dargestellt, welches im weiteren näher erläutert wird.

Es zeigen
- Figur 1: eine Skizze des Aufbaus eines Datensegments mit Kontrollinformation und Nutzdateninformation;
- Figur 2: eine Skizze einer Rechneranordnung mit zwei Rechnern, und einem Übertragungsmedium zur Codierung, Übertragung und Decodierung digitaler Daten;

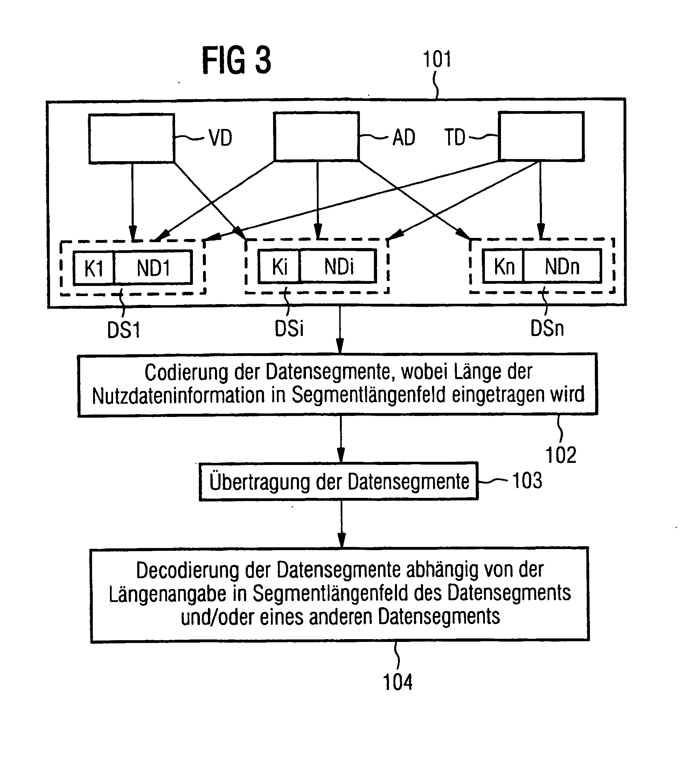

- Figur 3: ein Ablaufdiagramm, in dem die Verfahrensschritte des Verfahrens dargestellt sind.

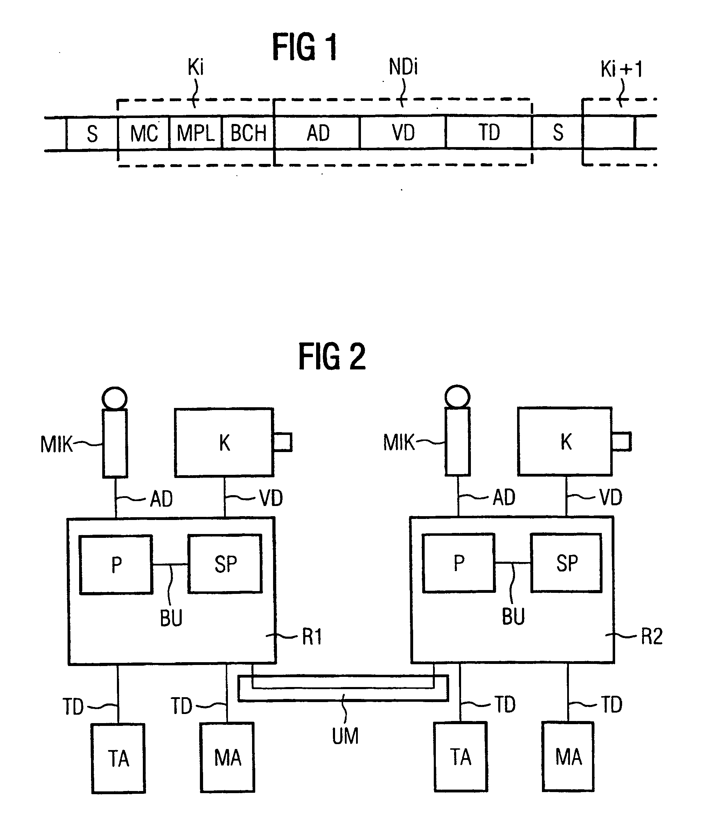

Figur 2 zeigt eine Kamera K, mit der eine Folge von Bildern B aufgenommen wird und als digitale Videodaten VD einem ersten Rechner R1 über eine Verbindung V zugeführt und gespeichert wird. Über ein Mikrophon MIK wird ein Sprachsignal SS aufgenommen und als digitalisierte Audiodaten AD dem ersten Rechner R1 zugeführt und gespeichert. Eingabe von Textinformation TD erfolgt über eine Tastatur TA und/oder eine Maus MA. Der erste Rechner R1 weist ferner einen Bildschirm BS zur Darstellung beliebiger Information auf.

Der erste Rechner R1 ist über ein Übertragungsmedium UM, z.B. einem Kabel oder einer Funkübertragungsstrecke, mit einem zweiten Rechner R2 verbunden. Über das Übertragungsmedium UM werden die von dem ersten Rechner R1 codierten digitalen Daten an den zweiten Rechner R2 übertragen und dort decodiert.

Der erste Rechner R1 und der zweite Rechner R2 weisen jeweils einen Speicher SP und eine Prozessoreinheit P auf, die über einen Bus BU miteinander verbunden sind. Die Prozessoreinheit P des ersten Rechners R1 ist derart ausgestaltet, daß die im weiteren erläuterten Verfahrensschritte zur Codierung der digitalen Daten durchgeführt werden. Die Prozessoreinheit P des zweiten Rechners R2 ist derart ausgestaltet, daß die empfangenen codierten Daten decodiert werden entsprechend dem im weiteren beschriebenen Verfahren. Der zweite Rechner R2 weist ebenfalls einen Bildschirm BS zur Darstellung beliebiger Information sowie eine Tastatur TA und/oder eine Maus MarkenG, eine Kamera K und ein Mikrophon MIK auf.

Die digitalen Daten, Videodaten VD, Audiodaten AD und/oder Textdaten TD werden in dem ersten Rechner R1 in mindestens ein Datensegment Dsi (i = 1 .. n) gruppiert (Schritt 101) (vgl. Figur 1).

Das Datensegment DSi enthält Kontrollinformation Ki und Nutzdateninformation NDi, die eigentlich zu übertragenden digitalen Daten.

Der Aufbau des Datensegments DSi ist in Figur 1 dargestellt.

Das Datensegment DSi weist ein Synchronisationswort S (HDLC-Flag), bestehend aus der Bitfolge "0111 1110", auf.

Die Kontrollinformation Ki enthält zur Übertragung erforderliche Information. In einem Multiplex-Code-Feld MC der Länge 4 Bit wird angegeben, welche Art von Daten in welcher Reihenfolge in der Nutzdateninformation NDi enthalten sind.

Mit einem Segmentlängenfeld MPL wird die Länge der Nutzdateninformation NDi und damit implizit die Länge des Datensegments DSi angegeben, da die Kontrollinformation Ki und das Synchronisationswort S eine feste vorgebbare Länge aufweisen.

Das Segmentlängenfeld MPL weist eine Länge von 7 Bit auf, womit eine maximale Länge der Nutzdateninformation NDi von 126 Bytes beschrieben werden kann. Der Wert 127 ist reserviert für den Fall, daß die Nutzdateninformation NDi länger ist als 126 Bytes.

Ein BCH-Feld BCH enthält Fehlererkennungsinformation und/oder Fehlerkorrekturinformation für die in der Kontrollinformation Ki enthaltenen Daten. Das BCH-Feld BCH weist eine Länge von 4 Bit auf. Das BCH-Feld BCH enthält den über die Kontrollinformation Ki gebildeten BCH-Code (15,11) mit einer freien Distanz von 3. Mit dem BCH-Code (15,11) kann ein Fehler korrigiert und weitere Fehler erkannt werden.

Die Nutzdateninformation NDi enthält Videodaten VD, Audiodaten AD und/oder Textdaten TD.

Das Datensegment DSi bzw. die Datensegmente DSi werden codiert, wobei in das Segmentlängenfeld MPL die Länge der Nutzdateninformation NDi von dem ersten Rechner R1 eingetragen wird (Schritt 102).

Das codierte Datensegment DSi bzw. die codierten Datensegmente DSi wird bzw. werden von dem ersten Rechner R1 zu dem zweiten Rechner R2 übertragen (Schritt 103).

Die in dem zweiten Rechner R2 empfangenen Datensegmente DSi werden abhängig von der Längenangabe in dem Segmentlängenfeld MPL des Datensegments DSi und/oder abhängig von der Längenangabe in dem Segmentlängenfeld MPL eines anderen Datensegments DSj, j ≠ i decodiert (Schritt 104).

Dies erfolgt dadurch daß bei einem empfangenen Bitstrom zunächst das Synchronisationswort S ermittelt wird, um in dem Bitstrom den Anfang eines Datensegments DS1 zu finden.

Zur Erhöhung des Fehlerrobustheit des Synchronisationsworts S wird eine Korrelationsschwelle verwendet, mit der eine Anzahl Bits angegeben wird, die ein Datenwort identisch mit dem Synchronisationswort S haben muß, um als Synchronisationswort S klassifiziert zu werden. Wird die Korrelationsschwelle zu hoch gewählt, so wird die Anzahl nicht erkannter Synchronisationsworte S steigen, da Übertragungsfehler das Synchronisationswort S verfälschen.

Bei einer zu niedrig gewählten Korrelationsschwelle werden mehr Synchronisationsworte S erkannt, jedoch nimmt auch die Zahl falsch klassifizierter Synchronisationsworte S zu.

Bei einer Länge des Synchronisationswortes S von 32 Bit hat sich eine Korrelationsschwelle von 27 Bit als ausreichend herausgestellt.

Wurde das Synchronisationswort S korrekt ermittelt und wurde auch die Kontrollinformation Ki korrekt decodiert, so wird unter Verwendung des Segmentlängenfeldes MPL die Position des Synchronisationswort S des folgenden Datensegments DSi+1 ermittelt.

Damit besteht ein A priori-Wissen, womit es möglich wird, die Korrelationsschwelle für die ermittelte Position zu verringern, um die Fehlerrobustheit zu erhöhen. Es hat sich in diesem Fall eine Korrelationsschwelle von 23 Bit als ausreichend herausgestellt.

Um eine fehlerhafte Decodierung zu verhindern ist es ferner vorgesehen, auch in der Nutzdateninformation NDi nach dem Synchronisationswort S zu suchen, wobei die Korrelationsschwelle allerdings hoch gewählt wird, um die Detektion falscher Synchronisationsworte S zu vermeiden. Es hat sich in diesem Fall eine Korrelationsschwelle von 30 Bit als ausreichend herausgestellt.

Weiterhin wird ist es vorgesehen, bei der Decodierung A priori-Wissen vorangegangener Datensegmente DSi-1 zu verwenden, um die Position des Synchronisationsworts S des Datensegments DSi und somit auch die Position der Kontrollinformation Ki in dem Datensegment DSi zu ermitteln. Ist die Decodierung der Kontrollinformation Ki in dem Datensegment DSi nunmehr fehlerhfrei, so kann unabhängig von dem Korrelationsergebnis geschlossen werden, daß das Datensegment DSi korrekt erkannt wurde.

Wird die Kontrollinformation Ki in dem Datensegment DSi nicht korrekt decodiert, so kann das Segmentlängenfeld MPL nicht verwendet werden. Es wird in diesem Fall das Synchronisationswort S des folgenden Datensegments DSi+1 ermittelt. Damit ist bekannt, wie viele Bits zwischen den aufeinanderfolgenden Synchronisationsworten S sind. Aus dieser Information wird die Länge der Nutzdateninformation NDi und somit der Wert des Segmentlängenfeldes MPL berechnet (Kontrollinformation Ki und Synchronisationswort S haben feste Längen). Damit ist es möglich, das Segmentlängenfeld MPL auf Grund der Berechnung zu korrigieren. Damit steigt die Wahrscheinlichkeit einer korrekten Decodierung der Kontrollinformation Ki.

Im weiteren werden einige Alternativen zu dem oben beschriebenen Ausführungsbeispiel aufgezeigt.

Die Anzahl der Bits in den obengenannten Feldern in der Kontrollinformation Ki sind frei vorgebbar und nicht wesentlich für die Erfindung.

Die Verwendung des Synchronisationswort ist nicht erforderlich, erhöht jedoch die Fehlerrobustheit bei der Datenübertragung. Je länger das Synchronisationswort gewählt wird, desto größer ist die Fehlerrobustheit, die erreichbar ist.

Die in dem BCH-Feld BCH enthaltene Fehlererkennungsinformation und/oder Fehlerkorrekturinformation kann auf beliebige Weise unter Verwendung eines Codes zur Fehlererkennung und/oder Fehlerkorrektur gebildet werden. Die Verwendung des BCH-Feldes BCH ist im Rahmen der Erfindung optional.

Unter einem Rechner ist in diesem Zusammenhang eine Vorrichtung mit einer Prozessoreinheit zu verstehen, mit der die oben beschriebenen Verfahrensschritt durchgeführt werden können, z.B. auch ein Bildtelephon mit integriertem Mikroprozessor.

Anschaulich kann die Erfindung darin gesehen werden, daß eine Längenangabe des jeweiligen Datensegments in der Kontrollinformation des Datensegments enthalten ist, wodurch eine sichere Synchronisation und damit verbesserte Fehlerrobustheit erreicht wird.

## Patentansprüche

1. Verfahren zur Dekodierung mehrere empfangener Datensegmente (DS), wobei
die Datensegmente (DSᵢ) jeweils eine Kontrollinformation (Kᵢ) mit einer Längenangabe (MPLᵢ) des jeweiligen Datensegments (DSᵢ) und eine Synchronisationsinformation (Sᵢ) enthalten, und wobei die Datensegmente (DSᵢ) abhängig von der Längenangabe (MPLⱼ) mindestens eines anderen Datensegments (DSⱼ) und abhängig von der Synchronisationsinformation (Sⱼ) mindestens eines anderen Datensegments (DSⱼ) dekodiert werden.

2. Verfahren zur Kodierung , Übertragung und Dekodierung digitaler Daten mit den folgenden Schritten:
(a) Gruppieren (S101) von digitalen Daten in mehrere Datensegmente (DS);
(b) Kodieren (S102) der Datensegmente (DS), wobei jeweils eine Längenangabe (MPLᵢ) des Datensegments (DSᵢ) bei der Kodierung in eine Kontrollinformation (Kᵢ) des Datensegments (DSᵢ) eingetragen wird und wobei den Datensegmenten (DSᵢ) bei der Kodierung jeweils eine Synchronisationsinformation (Sᵢ) zugewiesen wird;
(c) Übertragen (S103) der Datensegmente (DSᵢ);
(d) Empfangen der Datensegmente (DSᵢ);
(e) Dekodieren (S104) der Datensegmente, wobei ein empfangenes Datensegment (DSᵢ) jeweils abhängig von der Längenangabe (MPLⱼ) mindestens eines anderen empfangenen Datensegments (DSⱼ) und abhängig von einer Synchronisationsinformation (Sⱼ) mindestens eines anderen empfangenen Datensegments (DSⱼ) dekodiert wird.

3. Verfahren nach Anspruch 2,
wobei die Dekodierung des empfangenen Datensegments (DSᵢ) abhängig von der Längenangabe (MPLᵢ) des Datensegments (DSᵢ) und der Synchronisationsinformation (Sᵢ) des Datensegments (DSᵢ) erfolgt.

4. Verfahren nach einem der Ansprüche 1 bis 3,
bei dem die Kontrollinformation (Kᵢ) mindestens die Synchronisationsinformation (Sᵢ) in Form einer innerhalb des Datensegments (DSᵢ) eindeutigen Bitfolge enthält.

5. Verfahren nach einem der Ansprüche 1 bis 4,
bei dem die Kontrollinformation (Kᵢ) eine Angabe (MC) darüber enthält, welche Arten digitaler Daten in dem Datensegment (DSᵢ) enthalten sind.

6. Verfahren nach Anspruch 5,
bei dem die Angabe (MC) über die Art enthaltener Daten eine Länge von 4 Bit aufweist.

7. Verfahren nach einem der Ansprüche 1 bis 6,
bei dem die Längenangabe (MPL) eine Länge von 7 Bit aufweist.

8. Verfahren nach einem der Ansprüche 1 bis 7,
bei dem die Längenangabe (MPL) und/oder eine Angabe (MC) über die Art in dem Datensegment (DSᵢ) enthaltener Daten mit Fehlererkennungsinformation (BCH) und/oder Fehlerkorrekturinformation gesichert wird/werden.

9. Vorrichtung zur Dekodierung mehrerer empfangener Datensegmente (DS) mit:
einer Empfängereinheit zum Empfangen der Datensegmente (DS), die eine Prozessoreinheit (P) aufweist,
wobei die empfangenen Datensegmente (DS) jeweils eine Kontrollinformation (Kᵢ) mit einer Längenangabe (MPLᵢ) des jeweiligen Datensegments (DSᵢ) und eine Synchronisationsinformation (Sᵢ) enthalten, und
wobei ein empfangenes Datensegment (DSᵢ) jeweils abhängig von der Längenangabe (MPLⱼ) mindestens eines anderen empfangenen Datensegments (DSⱼ) und abhängig von der Synchronisationsinformation (Sⱼ) mindestens eines anderen empfangenen Datensegments (DSⱼ) dekodiert wird.

10. Anordnung zur Kodierung, Übertragung und Dekodierung digitaler Daten mit:
(a) einer ersten Vorrichtung, die eine erste Prozessoreinheit (P1) aufweist,
wobei die digitalen Daten in mindestens ein Datensegment (DS) gruppiert werden,
das Datensegment (DS) kodiert wird, wobei eine Längenangabe (MPL) des Datensegments (DS) bei der Kodierung in eine Kontrollinformation (Kᵢ) des Datensegments (DSᵢ) eingetragen wird und
wobei dem Datensegment (DSᵢ) eine Synchronisationsinformation (Sᵢ) zugewiesen wird;
(b) einem Mittel (UM) zum Übertragen des Datensegments (DSᵢ);
(c) und mit einer zweiten Vorrichtung, die eine Empfängereinheit zum Empfangen der Datensegmente (DS) sowie eine zweite Prozessoreinheit (P2) aufweist,
wobei ein empfangenes Datensegment (DSᵢ) jeweils abhängig von der Längenangabe (MPLⱼ) mindestens eines anderen empfangenen Datensegments (DSⱼ) und abhängig von der Synchronisationsinformation (Sⱼ) mindestens eines anderen Datensegments (DSⱼ) dekodiert wird.

## Claims

1. Method for decoding two or more received data segments (DS), wherein
the data segments (DSᵢ) each contain monitoring information (Kᵢ) with a length statement (MPLᵢ) for the respective data segment (DSᵢ) and synchronization information (Sᵢ) and wherein the data segments (DSᵢ) are decoded as a function of the length statement (MPLⱼ) of at least one other data segment (DSⱼ) and as a function of the synchronization information (Sⱼ) of at least one other data segment (DSⱼ).

2. Method for coding, transmission and decoding of digital data having the following steps:
(a) grouping (S101) of digital data into two or more data segments (DS);
(b) coding (S102) of the data segments (DS), wherein a length statement (MPLᵢ) of the data segment (DSᵢ) is in each case entered during the coding process in monitoring information (Kᵢ) for the data segment (DSᵢ), and wherein the data segments (DSᵢ) are each assigned synchronization information (Sᵢ) during the coding process;
(c) transmission (S103) of the data segments (DSᵢ);
(d) reception of the data segments (DSᵢ);
(e) decoding (S104) of the data segments, wherein a received data segment (DSᵢ) is in each case decoded as a function of the length statement (MPLⱼ) of at least one other received data segment (DSⱼ) and as a function of synchronization information (Sⱼ) of at least one other received data segment (DSⱼ).

3. Method according to Claim 2,
wherein the decoding of the received data segment (DSᵢ) is carried out as a function of the length statement (MPLᵢ) of the data segment (DSᵢ) and of the synchronization information (Sᵢ) of the data segment (DSᵢ).

4. Method according to one of Claims 1 to 3,
in which the monitoring information (Kᵢ) contains at least the synchronization information (Sᵢ) in the form of a bit sequence which is unique within the data segment (DSᵢ).

5. Method according to one of Claims 1 to 4,
in which the monitoring information (Kᵢ) contains a statement (MC) about what types of digital data are contained in the data segment (DSᵢ).

6. Method according to Claim 5,
in which the statement (MC) about the nature of contained data has a length of 4 bits.

7. Method according to one of Claims 1 to 6,
in which the length statement (MPL) has a length of 7 bits.

8. Method according to one of Claims 1 to 7,
in which the length statement (MPL) and/or a statement (MC) about the nature of data contained in the data segment (DSᵢ) are/is protected by error identification information (BCH) and/or error correction information.

9. Apparatus for decoding two or more received data segments (DS) having:
a receiver unit for reception of the data segments (DS), which has a processor unit (P),
wherein the received data segments (DS) each contain monitoring information (Kᵢ) with a length statement (MPLᵢ) for the respective data segment (DSᵢ) and synchronization information (Sᵢ) and
wherein a received data segment (DSᵢ) is in each case decoded as a function of the length statement (MPLⱼ) of at least one other received data segment (DSⱼ) and as a function of the synchronization information (Sⱼ) of at least one other received data segment (DSⱼ).

10. Arrangement for coding, transmission and decoding of digital data having:
(a) a first apparatus which has a first processor unit (P1),
wherein the digital data is grouped in at least one data segment (DS),
the data segment (DS) is coded, with a length statement (MPL) of the data segment (DS) being entered during the coding process in monitoring information (Kᵢ) for the data segment (DSᵢ), and
wherein the data segment (DSᵢ) is assigned synchronization information (Sᵢ);
(b) a means (UM) for transmission of the data segment (DSᵢ);
(c) and having a second apparatus, which has a receiver unit for reception of the data segments (DS) as well as a second processor unit (P2),
wherein a received data segment (DSᵢ) is in each case decoded as a function of the length statement (MPLⱼ) of at least one other received data segment (DSⱼ) and as a function of the synchronization information (Sⱼ) of at least one other data segment (DSⱼ).

## Revendications

1. Procédé de décodage de plusieurs segments de données (DS) réceptionnés,
les segments de données (DSᵢ) contenant respectivement une information de contrôle (Kᵢ) avec une indication de longueur (MPLᵢ) du segment de données respectif (DSᵢ) et une information de synchronisation (Sᵢ) et les segments de données (DSᵢ) étant décodés en fonction de l'indication de longueur (MPLⱼ) d'au moins un autre segment de données (DSⱼ) et en fonction de l'information de synchronisation (Sⱼ) d'au moins un autre segment de données (DSⱼ).

2. Procédé de codage, de transmission et de décodage de données numériques, avec les étapes suivantes :
(a) regroupement (S101) de données numériques en plusieurs segments de données (DS) ;
(b) codage (S 102) des segments de données (DS), respectivement une indication de longueur (MPLᵢ) du segment de données (DSᵢ) étant enregistrée lors du codage en une information de contrôle (Kᵢ) du segment de données (DSᵢ) et une information de synchronisation (Sᵢ) étant respectivement affectée aux segments de données (DSᵢ) lors du codage ;
(c) transmission (S103) des segments de données (DSᵢ) ;
(d) réception des segments de données (DSᵢ) ;
(e) décodage (S104) des segments de données, un segment de données réceptionné (DSᵢ) étant décodé respectivement en fonction de l'indication de longueur (MPLⱼ) d'au moins un autre segment de données réceptionné (DSⱼ) et en fonction d'une information de synchronisation (Sⱼ) d'au moins un autre segment de données réceptionné (DSⱼ).

3. Procédé selon la revendication 2,
le décodage du segment de données réceptionné (DSᵢ) étant effectué en fonction de l'indication de longueur (MPLᵢ) du segment de données (DSᵢ) et de l'information de synchronisation (Sᵢ) du segment de données (DSᵢ).

4. Procédé selon l'une quelconque des revendications 1 à 3,
dans lequel l'information de contrôle (Kᵢ) contient au moins l'information de synchronisation (Sᵢ) sous la forme d'une séquence de bits indubitable à l'intérieur du segment de données (DSᵢ).

5. Procédé selon l'une quelconque des revendications 1 à 4,
dans lequel l'information de contrôle (Kᵢ) contient une indication (MC) sur la nature des données numériques qui sont contenues dans le segment de données (DSᵢ).

6. Procédé selon la revendication 5,
dans lequel l'indication (MC) au sujet de la nature des données contenues présente une longueur de 4 bits.

7. Procédé selon l'une quelconque des revendications 1 à 6,
dans lequel l'indication de longueur (MPL) présente une longueur de 7 bits.

8. Procédé selon l'une quelconque des revendications 1 à 7,
dans lequel l'indication de longueur (MPL) et/ou une indication (MC) au sujet de la nature des données contenues dans le segment de données (DSᵢ) est / sont sécurisée(s) par une information d'identification des erreurs (BCH) et/ou par une information de correction des erreurs.

9. Dispositif de décodage de plusieurs segments de données réceptionnés (DS), avec :
un récepteur pour réceptionner les segments de données (DS),
comportant un processeur (P);
les segments de données réceptionnés (DS) contenant respectivement une information de contrôle (Kᵢ₎ avec une indication de longueur (MPLᵢ) du segment de données respectif (DSᵢ) et une information de synchronisation (Sᵢ) et
un segment de données réceptionné (DSᵢ) étant décodé respectivement en fonction de l'indication de longueur (MPLⱼ) d'au moins un autre segment de données réceptionné (DSⱼ) et en fonction de l'information de synchronisation (Sⱼ) d'au moins un autre segment de données réceptionné (DSⱼ).

10. Agencement pour le codage, la transmission et le décodage de données numériques, avec :
(a) un premier dispositif qui comporte un premier processeur (P1),
les données numériques étant regroupées en au moins un segment de données (DS),
le segment de données (DS) étant codé, une indication de longueur (MPL) du segment de données (DS) étant enregistrée dans une information de contrôle (Kᵢ) du segment de données (DSᵢ), lors du codage et
une information de synchronisation (Sᵢ) étant affectée au segment de données (DSᵢ) ;
(b) un moyen de transmission (UM) du segment de données (DSᵢ) ;
(c) et avec un deuxième dispositif, comportant un récepteur pour réceptionner les segments de données (DS), ainsi qu'un deuxième processeur (P2),
un segment de données réceptionné (DSᵢ) étant décodé respectivement en fonction de l'indication de longueur (MPLⱼ) d'au moins un autre segment de données réceptionné (DSⱼ) et en fonction de l'information de synchronisation (Sⱼ) d'au moins un autre segment de données (DSⱼ).
